# EUROPÄISCHE PATENTSCHRIFT

(11) **EP 1 332 066 B1**
(45) Veröffentlichungstag und Bekanntmachung des Hinweises auf die Patenterteilung: **10.03.2010**
(21) Anmeldenummer: 01982308.7
(22) Anmeldetag: 18.09.2001
(51) Int. Cl.: B60N 2/16

(54) **GELENKHEBELKONSTRUKTION FÜR EIN SITZGESTELL**
ARTICULATED LEVER CONSTRUCTION FOR A SEAT FRAME
SYSTÈME DE LEVIERS ARTICULÉS POUR CHASSIS DE SIÈGE

(30) Priorität: 24.10.2000 DE 10052581; 03.07.2001 DE 10132190
(43) Veröffentlichungstag der Anmeldung: 06.08.2003
(73) Patentinhaber: Volkswagen Aktiengesellschaft, 38436 Wolfsburg (DE)
(72) Erfinder: HEIRINGHOFF, Heinz, D-31691 Helpsen (DE)
(86) Internationale Anmeldenummer: PCT/EP2001/010763
(87) Internationale Veröffentlichungsnummer: WO 2002/034563

(56) Entgegenhaltungen:
- DE-C- 19 607 060
- GB-A- 2 103 077
- US-A- 5 957 426

## Beschreibung

Die vorliegende Erfindung betrifft eine Gelenkhebelkonstruktion für ein Sitzgestell gemäß dem Oberbegriff des Anspruchs 1.

Die Erfindung ist insbesondere für Sitzgestelle von höhenverstellbaren Fahrzeugsitzen geeignet.

Aus der DE 196 07 060 C1 ist eine Gelenkhebelkonstruktion entsprechend dem Oberbegriff des Anspruchs 1 für ein Sitzgestell eines Kraftfahrzeugsitzes bekannt, bei dem die vorderen und hinteren Füße schwenkbar mit einer tragenden Struktur des Sitzteiles schwenkbar verbunden sind und zusammen mit der Bodenstruktur des Fahrzeuges ein Gelenkviereck bilden. An der vorderen Schwinge ist eine Zugkoppel angeordnet, durch die die Schwinge dann, wenn der Sitz nach vorne klappt wird, in diejenige Lage geschwenkt wird, in welcher der Platzbedarf des zusammengefalteten Sitzes ein Minimum hat. Im Falle eines Unfalles besteht die Gefahr, daß die gelenkige Konstruktion versagt und der Sitz mehr oder weniger ohne Führung im Fahrzeug verbleibt. Dies ist nachteilig, da die modernen Sicherheitssysteme aufeinander abgestimmt sind und die Position der Insassen von erheblicher Bedeutung ist.

Der Erfindung liegt die Aufgabe zugrunde, eine Gelenkhebelkonstruktion für Fahrzeugsitze mit einem möglichst geringen Materialeinsatz bereitzustellen, mit der eine erhöhte Sicherheit für die Fahrzeuginsassen gewährleistet ist.

Diese Aufgabe wird durch eine Gelenkhebelkonstruktion mit den Merkmalen des Anspruchs 1 gelöst.

Erfindungsgemäß wird dazu an einem die Relativbewegung von Gelenkhebeln beschränkenden Sperrkörper eine Zusatzverrastung vorgesehen, die insbesondere bei Höchstbelastung der im Kraftfluß befindlichen Teile eine zusätzliche Sperrwirkung auch dann ermöglicht, wenn die miteinander bereits in Rasteingriff befindlichen Bauteilabschnitte ihrerseits auch noch verformt werden. Die während des Eingriffes dann noch stattfindenden Relativbewegungen werden mittels der Zusatzverrastung unterbunden, so daß der Sperrkörper und der die Rastgeometrie haltende Gelenkhebel nicht in einer Sperrwirkung aufhebenden Weise aneinander vorbeigleiten können. Die Zusatzverrastung kann dabei entweder an dem Sperrkörper oder an der Rastgeometrie vorgesehen sind, wobei bei einer aufgrund eines Unfalles erzwungenen Relativbewegung, nachdem die Rastgeometrie an dem Sperrkörper bereits anliegt, insbesondere ein seitliches Ausweichen bzw. Verwinden der Gelenkhebelkonstruktion verhindert wird. Der Sitz kann sich dadurch nur in einer Ebene bewegen, wodurch bei einem Unfall die voreingestellte Zuordnung der Sicherheitseinrichtungen wie Gurt, Kopfstütze oder Airbags zu dem Insassen erhalten bleibt und somit die genannten Einrichtungen ihre Aufgabe wie vorgesehen erfüllen können.

Eine Ausgestaltung der Erfindung sieht vor, daß das Basisteil ein Sitzgestellseitenteil ist, das insbesondere als ein zusammengesetztes Bauteil aus einem äußeren und einem inneren Preßteil hergestellt ist. An dem Basisteil können auf einfache Art und Weise die weiteren Gelenkhebel zu dem Gelenkhebelverband befestigt werden, indem die Gelenkhebel an durch die Preßteile geführte Bolzen schwenkbar angebracht werden. Beispielsweise wird der Gelenkhebelverband durch einen hinteren Gelenkhebel, eine Zugstange und eine Höhenverstellung gebildet, wobei der hintere Gelenkhebel an einem Ende an einem Befestigungssockel beweglich befestigt ist, der wiederum an einer Sitzschiene oder der Bodengruppe des Fahrzeuges montiert ist. Die Höhenverstellung ist unmittelbar an dem Basisteil bzw. dem Sitzgestellseitenteil angebracht und die Zugstange bildet eine Koppelung zwischen der Höhenverstellung und dem hinteren Gelenkhebel.

In einer vorteilhaften Ausgestaltung ist vorgesehen, daß die Rastgeometrie der Zugstange zugeordnet ist, wodurch die Sperrwirkung der weitergehenden Relativbewegung zwischen den Gelenkhebeln an einer zentralen Stelle der Gelenkhebelkonstruktion erfolgt und eine Stabilisierung der Gelenkhebelverbandes einfach erfolgt. Eine einfache und wirkungsvolle Ausbildung der Rastgeometrie besteht in einem Fanghaken, der an der Zugstange oder an dem Sperrkörper ausgebildet oder daran befestigt ist. Der Fanghaken hintergreift eine Aussparung oder einem Vorsprung an dem korrespondierenden Bauteil und vermeidet durch die formschlüssige Verbindung eine weitergehende, unfallbedingte Relativbewegung zwischen den Gelenkhebeln. Vorteilhafterweise ist die Rastgeometrie ein integraler Bestandteil eines der Gelenkhebel, so daß die Rastgeometrie bereits bei der Herstellung der Gelenkhebel eingearbeitet sein kann. Alternativ kann die Rastgeometrie auch als ein separates Bauteil, das an einem der Gelenkhebel befestigt wird, ausgebildet sein, beispielsweise zu Zwecken der Nachrüstung oder der leichteren Anpassbarkeit an einen Modellwechsel oder gesetzliche Bestimmungen. Die Form der Rastgeometrie richtet sich insbesondere nach der Gestalt des Sperrkörpers, zweckmäßig sind jedoch runde Formen, die sich leicht durch Bohren oder Fräsen herstellen lassen.

Eine Variante der Erfindung, die einfach und mit besonders wenig Materialeinsatz zu verwirklichen ist, sieht vor, daß der Sperrkörper ein an dem Basisteil, konkreter dem Sitzgestellseitenteil, befestigter Stehbolzen ist. Der Stehbolzen kann durch entsprechende Ausnehmungen, beispielsweise Bohrung oder Ausstanzungen des Basisteils oder der Bauteile des Basisteiles, durchgeführt und damit verbunden, insbesondere verschweißt oder vernietet werden.

Zur Bildung der Zusatzverrastung weist der Stehbolzen eine zum Eingriff der Rastgeometrie ausgebildete Haltenut auf, mit der verhindert wird, daß der Gelenkhebelverband seitlich ausweicht, wenn die Rastgeometrie bereits an dem Stehbolzen anliegt und weitergehende Belastung auftreten.

Eine Weiterbildung der Erfindung sieht vor, daß die Zusatzverrastung als eine Verdickung an zumindest einem Ende des Stehbolzens zur Verhinderung einer axialen Verlagerung eines Gelenkhebels entlang des Stehbolzens ausgebildet ist. Alternativ zu einer Verdickung des Stehbolzens kann beispielsweise eine Verengung einer Kulissenführung oder eine gesonderte Abstützung an der Rastgeometrie, einem Gelenkhebel oder dem Sperrkörper vorgesehen sein, die eine Weiterverlagerung oder ein Ausscheren der gelenkigen Konstruktion verhindert.

Die konkrete Ausgestaltung des Sperrkörpers als ein Stehbolzen zum Einsatz in eine Gelenkhebelkonstruktion wird sehr einfach verwirklicht, indem der Stehbolzen als Kaltfließpressteil. Drehteil, Schmiedeteil oder dergleichen ausgeführt ist.

Nachfolgend wird ein Ausführungsbeispiel der vorliegenden Erfindung anhand der Beschreibung bevorzugter Ausführungsbeispiele unter Bezugnahme auf die beiliegenden Abbildungen näher beschrieben. Dabei zeigen
- Fig. 1 -: eine schematische Gesamtansicht einer Sitzgestellkonstruktion;
- Fig. 2 -: eine Schrägdraufsicht einer Gelenkhebelkonstruktion in einem hochgestellten Zustand;
- Fig. 3 -: eine Schrägdraufsicht einer Gelenkhebelkonstruktion in einem tiefgestellten Zustand;
- Fig. 4 -: eine Seitenansicht der Gelenkhebelkonstruktion, sowie
- Fig. 5 -: einen Schnitt gemäß A-A der Figur 3.

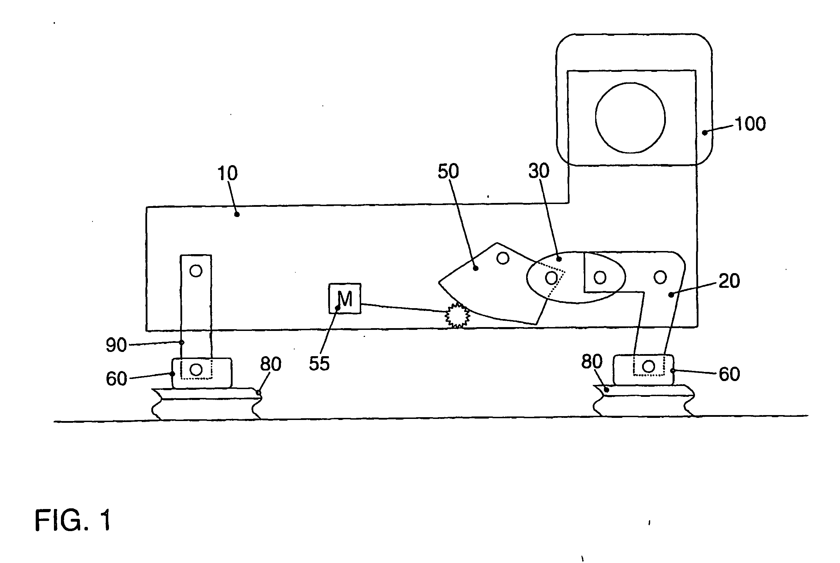

Figur 1 zeigt eine Sitzgestellkonstruktion in einer schematischen Darstellung in Seitenansicht mit einem Sitzgestellseitenteil 10, an dem eine Rückenlehne 100 verstellbar befestigt ist. An dem vorderen und hinteren Ende des Sitzgestellseitenteiles 10 sind ein vorderer Gelenkhebel 90 und ein hinterer Gelenkhebel 20 befestigt, über die mittels Befestigungssockel 60 die Verbindung zu Sitzschienen 80 hergestellt wird, die ihrerseits an der Bodengruppe des Fahrzeuges montiert sind. In dem dargestellten Ausführungsbeispiel sind beide Gelenkhebel 20, 90 mit drei bzw. zwei Drehpunkten beweglich ausgebildet, alternativ dazu kann der vordere Gelenkhebel starr oder mit einem Drehpunkt versehen sein.

Ebenfalls an dem Sitzgestellseitenteil 10 ist eine Höhenverstellung 50, deren Motor 55 und Antriebsritzel ebenfalls auf dem Sitzgestellseitenteil gelagert sind. Neben einem motorischen Antrieb kann eine Verstellung in der Sitzhöhe oder in der Sitzneigung über ein Handrad bewirkt werden. Die Höhenverstellung 50, die als eine verschwenkbare, mit einem Verzahnungsabschnitt versehene Platte ausgebildet ist, wirkt über eine an ihr schwenkbar gelagerte Zugstange 30 auf den hinteren Gelenkhebel 20, an dem die Zugstange 30 ebenfalls schwenkbar gelagert ist. Sofern die Höhenverstellung 50 per Hand oder mittels des Motors 55 angetrieben und in die eine oder andere Richtung verschwenkt wird, verlagert sich die Zugstange 30 und darüber der hintere Gelenkhebel 20. Die Verlagerung des hinteren Gelenkhebels 20 führt zu einer entsprechenden Absenkung oder Anhebung des Sitzgestellseitenteiles 10 und damit des Sitzes.

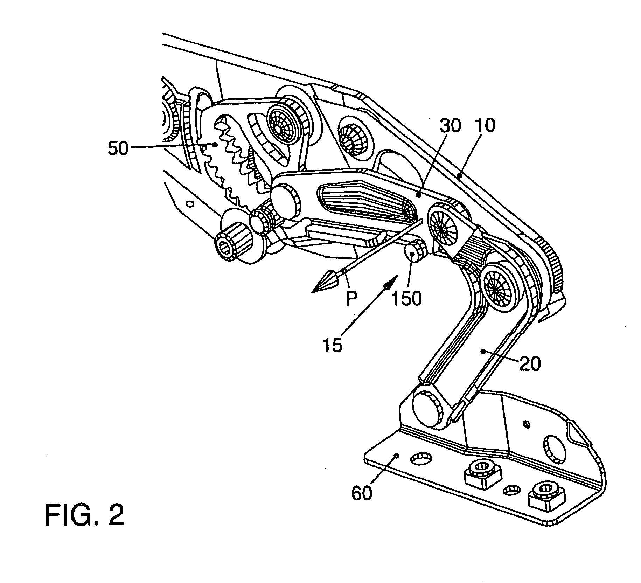

In der Figur 2 ist die Gelenkhebelkonstruktion in einer vergrößerten Darstellung als eine Schrägdraufsicht in einem hochgestellten Zustand des Sitzes dargestellt, in der die funktionelle Zuordnung der jeweiligen Bauteil deutlich wird. An dem Befestigungssockel 60 ist der hintere, L-förmige Gelenkhebel 20 über einen Bolzen drehbeweglich befestigt; ebenfalls ist der hintere Gelenkhebel 20 an dem Basisteil 10, hier dem Sitzgestellseitenteil über eine Bolzenverbindung befestigt. An dem vorderen Ende des kürzeren Schenkels des Gelenkhebels 20 ist die Zugstange 30 montiert, deren anderes Ende an der Höhenverstellung 50 befestigt ist. In der dargestellten Position wurde die mit der Verzahnung versehene, verschwenkbare Platte der Höhenverstellung 50 maximal im Uhrzeigersinn verdreht, wodurch die Zugstange 30 nach links verlagert und der hintere Gelenkhebel 20 um den Drehpunkt auf dem Befestigungssockel 60 entgegen dem Uhrzeigersinn maximal verschwenkt wurde. Das Sitzgestellseitenteil 10 befindet sich demnach im angehobener Stellung.

An dem Sitzgestellseitenteil 10, nachfolgend Basisteil, ist ein Sperrkörper 15 parallel zu den Schwenkachse oder senkrecht zu der Bewegungsebene des Gelenkhebelverbandes befestigt, beispielsweise eingepreßt, verschweißt oder vernietet. In der angehobenen Stellung bildet der Sperrkörper 15 einen Anschlag für eine Rastgeometrie 35, die an der Zugstange 30 ausgeformt ist. Der Anschlag dient einerseits als eine Begrenzung bei dem normalen Betrieb des Sitzes und andererseits als eine Sicherung gegen ein ungewolltes Verschwenken im Falles eines Unfalles über ein festgelegtes Maß hinaus. Bei einem Frontalzusammenstoß treten mitunter Kräfte auf, die den Sitz nach vorne bewegen, die von der Sitzverstellung, sei es motorisch oder handbetrieben, nicht mehr aufgenommen werden können und die zu einem Umklappen der Gelenkhebel 20, 90 führen könnten. Der Sperrkörper 15 verhindert dies. Wenn trotz eines unfallbedingten Anschlages weiter Kräfte auf die Gelenkhebelkonstruktion ausgeübt werden, besteht die Gefahr, daß der Sperrkörper 15 wegknickt und die Zugstange 30 aufgebogen wird. Dies würde zumindest zu einer Verlagerung der Zugstange 30 und einer Relativbewegung zwischen dem Sperrkörper 15 und der Rastgeometrie 35 in Richtung des Pfeiles P führen,

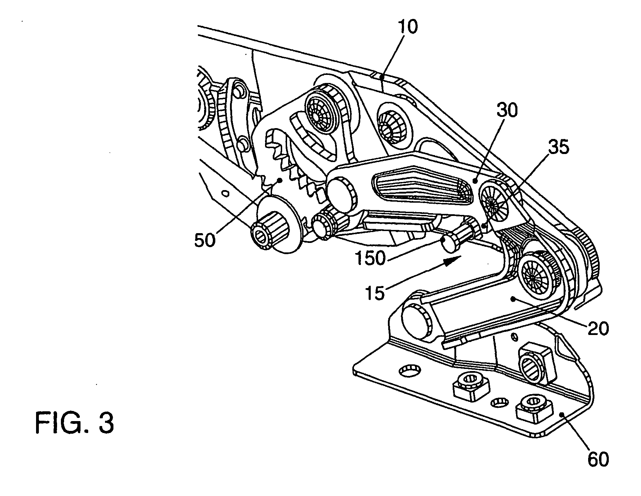

Um eine solche Relativbewegung zu verhindern ist an dem Ende des Sperrkörpers 15 eine Zusatzverrastung 150 angeordnet, die einer Verlagerung oder einem Wegknicken entgegenwirkt, beispielsweise wenn der Sperrkörper unter Höchstbelastung sich verbiegt. Diese Zusatzverrastung 150 wird deutlicher in der Figur 3, in der die Gelenkhebelkonstruktion der Figur 2 in einer abgesenkten Stellung gezeigt ist. Der Sperrkörper 15, auch Crashbolzen genannt, ist mit einer pilzartigen Verdickung an dessen freien Ende ausgestattet. Hinter diese pilzartige Verdickung greift bei einer unfallbedingten Verlagerung die Rastgeometrie 35; bei einer Verformung des Sperrkörpers 15 verhindert die Zusatzverrastung 150 ein Ausbrechen in Richtung des Pfeiles P, da eine formschlüssige Koppelung zwischen Sperrkörper 15 und der Rastgeometrie 35 besteht. Auf diese Weise wird ein Kollabieren des hinteren Gelenkhebelverbandes verhindert und der Sitz bleibt in einer kontrollierten Position.

Alternativ zu der Verdickung oder pilzartigen Ausgestaltung kann eine Nut in den Sperrkörper 15 eingearbeitet sein, in die die Rastgeometrie 35, die einstückig mit der Zugstange 30 ausgebildet ist, eingreift. Neben einer runden Ausführung kann der Sperrkörper 15 und die Rastgeometrie 35 einer eckigen Querschnitt und eine eckige Kontur aufweisen. Die Zusatzverrastung kann abweichend von der Darstellung des Ausführungsbeispieles auch an der Zugstange oder dem anderen Bauteil des Gelenkhebelverbandes angeordnet sein, das mit dem Sperrkörper entsprechend wechselwirkt. So ist ein Fanghaken oder eine formschlüssige Sicherung - beispielsweise in Gestalt einer entsprechenden Führung an dem Basisteil - möglich, um die Zugstange 30 oder einen anderen Gelenkhebel gegen ein Wegknicken oder Ausweichen zu sichern.

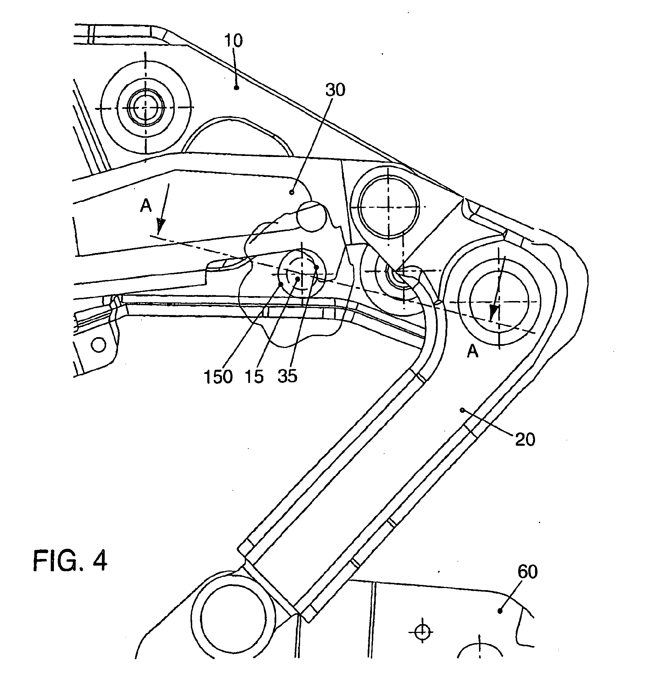

In der Figur 4 ist der hintere Gelenkhebelverband in einer Seitenansicht vergrößert dargestellt, wobei deutlich zu erkennen ist, daß die Rastgeometrie 35 in eine Nut des Sperrkörpers 15 eingreift und die Zusatzverrastung 150 die Rastgeometrie 35 in Richtung aus der Blattebene heraus überdeckt, so daß eine entsprechende Relativbewegung zwischen der Zugstange 30 und dem Sperrkörper 15 und dem Basisteil 10 verhindert wird.

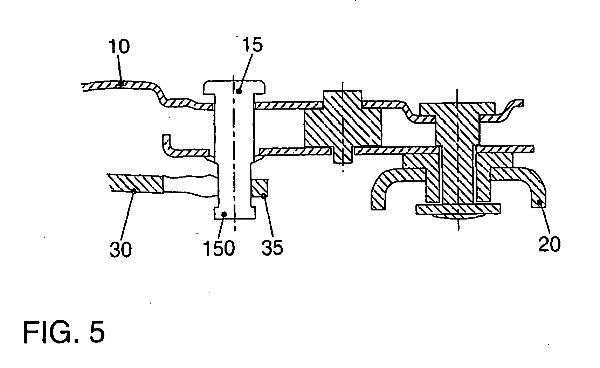

In der Figur 5, die einen Schnitt entlang A-A der Figur 4 zeigt, wird der Aufbau des Gelenkhebelverbandes deutlich, bei dem das Basisteil 10 aus einem äußeren und einem inneren Bauteil ausgebildet ist, durch das der Sperrkörper 15 hindurchgeführt ist. Die Zugstange 30 erstreckt sich parallel zu dem Basisteil 10 und senkrecht zu der Achse des Sperrkörpers 15 und die Rastgeometrie 35, als Fanghaken oder Unfallhaken ausgebildet, liegt an dem Sperrkörper 15 an und wird von der Zusatzverrastung 150 an dem freien Ende des Sperrkörpers 15 an einer axialen Bewegung entlang des Sperrkörpers 15 gehindert. Der hintere Gelenkhebel 20 ist klar erkennbar gelenkig an dem Basisteil 10 befestigt.

Ein solcher Sperrkörper 15 kann auch in der anderen Richtung wirksam eingesetzt werden und eine entsprechende Verlagerung bei einem Auffahrunfall verhindern. Ebenso ist die Anwendung nicht auf den hinteren Gelenkhebelverband beschränkt und kann auch alternativ oder in Verbindung an dem vorderen Gelenkhebelverband eingesetzt werden. Ebenso können mehrere Gelenkhebel des Verbandes mit einer solchen Zusatzverrastung gesichert werden.

## Patentansprüche

1. Gelenkhebelkonstruktion für ein Sitzgestell mit
Gelenkhebeln (20, 30), von denen wenigstens zwei zu einem an einem Basisteil (10) lagerbaren Gelenkhebelverband zusammengefasst sind,
wenigstens einen an dem Basisteil (10) befestigbaren Sperrkörper (15), an dem zur Begrenzung einer unfallbedingten Verlagerung wenigstens eines Gelenkhebels (20, 30) des Gelenkhebelverbandes eine Rastgeometrie (35) des wenigstens einen Gelenkhebels (20, 30) abstützbar ist,
**dadurch gekennzeichnet, dass** an dem Sperrkörper (15) und/oder der Rastgeometrie (35) eine Zusatzverrastung (150) vorgesehen ist, durch die nach einem unfallbedingten Eingriff der Rastgeometrie (35) an dem Sperrkörper (15) eine weitere unfallbedingte Relativbewegung zwischen dem Sperrkörper (15) und der Rastgeometrie (35) begrenzbar ist.

2. Gelenkhebelkonstruktion nach Anspruch 1, **dadurch gekennzeichnet, dass** das Basisteil (10) ein Sitzgestellseitenteil ist.

3. Gelenkhebelkonstruktion nach Anspruch 1 oder 2, **dadurch gekennzeichnet, dass** der Gelenkhebelverband durch einen hinteren Gelenkhebel (20), eine Zugstange (30) und eine Höhenverstellung (50) gebildet ist.

4. Gelenkhebelkonstruktion nach Anspruch 3, **dadurch gekennzeichnet, dass** die Rastgeometrie (35) der Zugstange (30) zugeordnet ist.

5. Gelenkhebelkonstruktion nach wenigstens einem der voranstehenden Ansprüche, **dadurch gekennzeichnet, dass** die Rastgeometrie (35) als ein Fanghaken ausgebildet ist.

6. Gelenkhebelkonstruktion nach wenigstens einem der voranstehenden Ansprüche, **dadurch gekennzeichnet, dass** die Rastgeometrie (35) integraler Bestandteil eines Gelenkhebels (20, 30) ist.

7. Gelenkhebelkonstruktion nach wenigstens einem der voranstehenden Ansprüche, **dadurch gekennzeichnet, dass** der Sperrkörper (15) ein an dem Basisteil (10), insbesondere dem Sitzgestellseitenteil, befestigbarer Stehbolzen ist.

8. Gelenkhebelkbnstruktion nach Anspruch 7, **dadurch gekennzeichnet, dass** zur Bildung der Zusatzverrastung (150) der Stehbolzen (15) eine zum Eingriff der Rastgeometrie (35) ausgebildete Haltenut aufweist.

9. Gelenkhebelkonstruktion nach Anspruch 7 oder 8, **dadurch gekennzeichnet, dass** die Zusatzverrastung (40) als eine Verdickung an zumindest einem Ende des Stehbolzens (15) zur Verhinderung einer axialen Verlagerung eines Gelenkhebels (20, 30) entlang des Stehbolzens (15) ausgebildet ist.

10. Gelenkhebelkonstruktion nach Anspruch 7, 8 oder 9, **dadurch gekennzeichnet, dass** der Stehbolzen (15) als Kaltfließpressteil, Drehteil oder Schmiedeteil ausgeführt ist.

## Claims

1. Articulated lever construction for a seat frame, having
articulated levers (20, 30), at least two of which are combined to form an articulated lever assembly which can be mounted on a base part (10),
at least one locking body (15) which can be fastened to the base part (10) and on which, to limit an accident-induced displacement of at least one articulated lever (20, 30) of the articulated lever assembly, a latching geometry (35) of the at least one articulated lever (20, 30) can be supported,
**characterized in that** an auxiliary latching arrangement (150) is provided on the locking body (15) and/or on the latching geometry (35), by means of which auxiliary latching arrangement (150), after an accident-induced engagement of the latching geometry (35) on the locking body (15), a further accident-induced relative movement between the locking body (15) and the latching geometry (35) can be limited.

2. Articulated lever construction according to Claim 1, **characterized in that** the base part (10) is a seat frame side part.

3. Articulated lever construction according to Claim 1 or 2, **characterized in that** the articulated lever assembly is formed by a rear articulated lever (20), a tension rod (30) and a height adjustment arrangement (50).

4. Articulated lever construction according to Claim 3, **characterized in that** the latching geometry (35) is assigned to the tension rod (30).

5. Articulated lever construction according to at least one of the preceding claims, **characterized in that** the latching geometry (35) is designed as an intercepting hook.

6. Articulated lever construction according to at least one of the preceding claims, **characterized in that** the latching geometry (35) is an integral part of an articulated lever (20, 30).

7. Articulated lever construction according to at least one of the preceding claims, **characterized in that** the locking body (15) is a stud bolt which can be fastened to the base part (10), in particular to the seat frame side part.

8. Articulated lever construction according to Claim 7, **characterized in that**, to form the auxiliary latching arrangement (150), the stud bolt (15) has a holding groove which is formed so as to engage with the latching geometry (35).

9. Articulated lever construction according to Claim 7 or 8, **characterized in that** the auxiliary latching arrangement (40) is formed as a thickened portion on at least one end of the stud bolt (15) for preventing an axial displacement of an articulated lever (20, 30) along the stud bolt (15).

10. Articulated lever construction according to Claim 7, 8 or 9, **characterized in that** the stud bolt (15) is formed as a cold-extruded part, a turned part or a forged part.

## Revendications

1. Système de leviers articulés pour un châssis de siège avec des leviers articulés (20, 30), parmi lesquels au moins deux sont regroupés en une unité de leviers articulés pouvant être disposée au niveau d'une partie de base (10) ;
au moins un corps d'arrêt (15) pouvant être fixé à la partie de base (10) et contre lequel une forme d'encoche (35) de l'au moins un levier articulé (20, 30) peut être soutenue pour limiter un déplacement accidentel d'au moins un levier articulé (20, 30) de l'unité de leviers articulés ;
**caractérisé en ce qu'**un encliquetage supplémentaire (150) est prévu au niveau du corps d'arrêt (15) et/ou de la forme d'encoche (35), au moyen duquel un autre mouvement relatif accidentel peut être limité entre le corps d'arrêt (15) et la forme d'encoche (35) après un engrènement accidentel de la forme d'encoche (35) au niveau du corps d'arrêt (15).

2. Système de leviers articulés selon la revendication 1, **caractérisé en ce que** la partie de base (10) est une partie latérale du châssis de siège.

3. Système de leviers articulés selon la revendication 1 ou 2, **caractérisé en ce que** l'unité de leviers articulés est formée par un levier articulé (20) arrière, une tige de traction (30) et un dispositif de réglage en hauteur (50).

4. Système de leviers articulés selon la revendication 3, **caractérisé en ce que** la forme d'encoche (35) est associée à la tige de traction (30).

5. Système de leviers articulés selon au moins l'une quelconque des revendications précédentes, **caractérisé en ce que** la forme d'encoche (35) prend la forme d'un crochet de capture.

6. Système de leviers articulés selon au moins l'une quelconque des revendications précédentes, **caractérisé en ce que** la forme d'encoche (35) fait partie intégrante d'un levier articulé (20, 30).

7. Système de leviers articulés selon au moins l'une quelconque des revendications précédentes, **caractérisé en ce que** le corps d'arrêt (15) est un goujon fileté pouvant être fixé à la partie de base (10), notamment de la partie latérale du châssis de siège.

8. Système de leviers articulés selon la revendication 7, **caractérisé en ce que** le goujon fileté (15) comporte une rainure d'arrêt pour engrener la forme d'encoche (35) pour former l'encliquetage supplémentaire (150).

9. Système de leviers articulés selon la revendication 7 ou 8, **caractérisé en ce que** l'encliquetage supplémentaire (40) prend la forme d'un épaississement au niveau d'au moins une extrémité du goujon fileté (15) pour empêcher un mouvement axial d'un levier articulé (20, 30) le long du goujon fileté (15).

10. Système de leviers articulés selon la revendication 7, 8 ou 9, **caractérisé en ce que** le goujon fileté (15) est réalisé sous forme de pièce extrudée à froid, de pièce tournée ou de pièce forgée.
